# EUROPEAN PATENT APPLICATION

(11) **EP 1 621 662 A2**
(43) Date of publication of application: **01.02.2006**
(21) Application number: 05105454.2
(22) Date of filing: 21.06.2005
(51) Int. Cl.: D06F 58/24, D06F 25/00

(54) **Washing machine**

(30) Priority: 24.06.2004 KR 2004047877
(71) Applicant: SAMSUNG ELECTRONICS CO., LTD., Suwon-city, Gyeonggi-do (KR)
(72) Inventor: KIM, Hyung-gyoon, Suwon-si Gyeonggi-do (KR); PARK, Jae-ryong Cheongmyeongmaeul Apt., Suwon-shi, Gyeonggi-do (KR); CHO, Hwang-mook Samsung Electronics Dormitory, Suwon-shi Gyeonggi-do (KR); PYO, Sang-yeon, Suwon-si Gyeonggi-do (KR); YANG, Byoung-yull, Ansan-si Gyeonggi-do (KR)
(74) Representative: Grey, Ian Michael

(57) **Abstract**

A washing machine is provided that includes a drum (20) and a condensing duct (30) that communicates with the drum and is supplied with air from an inside of the drum. A coolant spray (40) is provided inside the condensing duct, and sprays coolant from a lower portion to an upper portion of the condensing duct. A washing machine is thus provided that enhances condensation efficiency by increasing a contact time between hot moisture-laden air in a condensing duct and the coolant, while decreasing time consumed during a drying phase.

## Description

The present invention relates to a washing and/or drying machine comprising a tub and a duct having an inlet and an outlet in communication with the inside of the tub and means to draw air from the tub into the duct and circulate it back into the tub, the duct extending from a lower portion of the tub to an upper portion of the tub.

Modern washing machines are often operable to perform drying operations as well as the usual washing and rinsing operations.

During a drying operation of a washing machine, heated air is supplied into the drum to heat the wet clothes therein and hot moisture-laden air is then drawn away from the heated clothes and condensed.

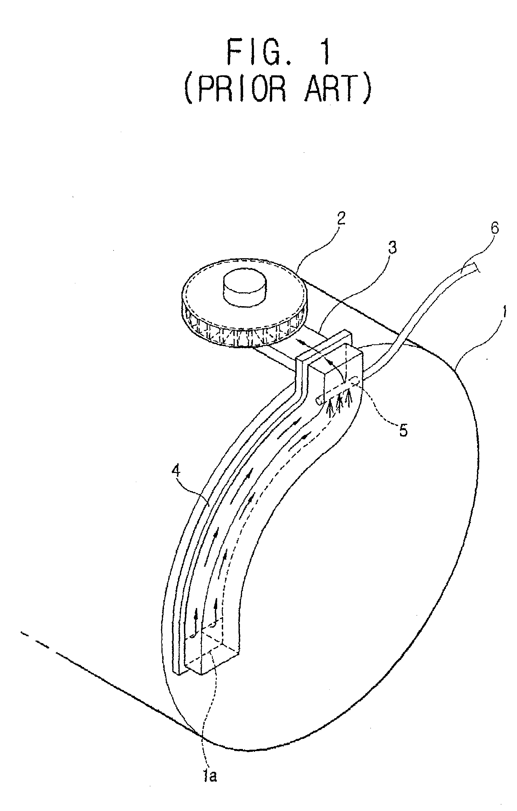

As shown in Figure 1, a conventional washing machine comprises a drum 1, a fan 2 and a fan duct 3 provided in an upper portion of the drum 1 and a condensing duct 4 connects the drum 1 and the fan duct 3. A spray nozzle 5 is provided inside the condensing duct at an upper portion thereof, and a coolant supply tube 6 supplies coolant to the spray nozzle. In operation, during a drying phase, hot moisture-laden air passes through an air outlet 1a in a lower portion of the drum 1 and is drawn into the condensing duct 4. As it passes through the condensing duct 4 towards the fan duct 3, the hot moisture-laden air comes into contact with the coolant which is sprayed from an upper portion of the condensing duct 4 to a lower portion thereof from the spray nozzle 5, and moisture contained in the air is condensed.

However, conventional washing machines spray the coolant from the upper portion to the lower portion of the condensing duct and therefore the hot moisture-laden air passing through the condensing duct 4 only comes into contact with the coolant for a very short period of time. Thus, a large volume of coolant, or a separate condensing device, is required to enhance the condensation efficiency.

It is therefore an object of the present invention to provide a washing and drying machine that substantially alleviates or overcomes the problems mentioned above.

Accordingly, the present invention is characterised in that the duct includes a spray means configured to spray coolant in a substantially upwardly direction within the duct.

In a preferred embodiment, the spray means is disposed in a lower portion of the duct, and preferably comprises a spray nozzle.

Preferably, at least one condensing guide is provided in the duct to increase the inside surface area of the duct, and conveniently, a plurality of condensing guides are provided in the duct.

Advantageously, the or each condensing guide comprises a fin extending from a wall of the duct and, in a preferred embodiment, at least one condensing guide is V-shaped in cross section and is positioned within the duct with the tip of the 'V' pointing towards the lower portion of the duct.

Preferably, the inlet to the duct is connected to an outlet of the tub at the lower portion of the tub, such that air drawn from the tub flows from the lower portion to the upper portion thereof in the same direction as the spray of coolant.

Conveniently, the spray of coolant is such that, in use, it stops proximate the upper portion of the duct and then falls back down to the lower portion thereof under gravity.

Preferably, the means to draw air from the tub into the duct and circulate it comprises a fan and conveniently, a heater to heat air circulating back into the tub.

A preferred embodiment provides a washing machine comprising a drum, a condensing duct communicating with the drum, and supplied with air from an inside of the drum and a coolant spray provided inside the condensing duct, and spraying coolant in an upward direction.

According to a further preferred embodiment of the present invention, the coolant spray sprays the coolant so that the coolant goes beyond an upper portion of the condensing duct and then falls down under the gravity. In an exemplary embodiment of the present invention, the coolant spray comprises a spray nozzle.

According to an even further preferred embodiment of the present invention, the washing machine further comprises a V-shaped condensing guide provided above an upper portion of the coolant spray, and protruded from an inner wall of the condensing duct.

An additional preferred embodiment of the present invention includes a drying machine comprising a drum, and a condensing duct which communicates with the drum. The condensing duct is supplied with air from an inside of the drum and a coolant spray is provided inside the condensing duct to spray coolant in an upward direction.

A preferred embodiment of the present invention will now be described, by way of example only, with reference to the accompanying drawings, in which:
Figure 1 is a perspective view of a condensing duct and a coolant spray of a conventional washing machine;
Figure 2 is a perspective view of a washing machine according to any embodiment of the present invention;
Figure 3 is a sectional view of the washing machine of Figure 2;
Figure 4 is a perspective view of a condensing duct and a coolant spray of the drum washing machine of Figures 2 and 3; and
Figure 5 is a cross sectional view of the condensing duct and coolant spray shown in Figure 4.

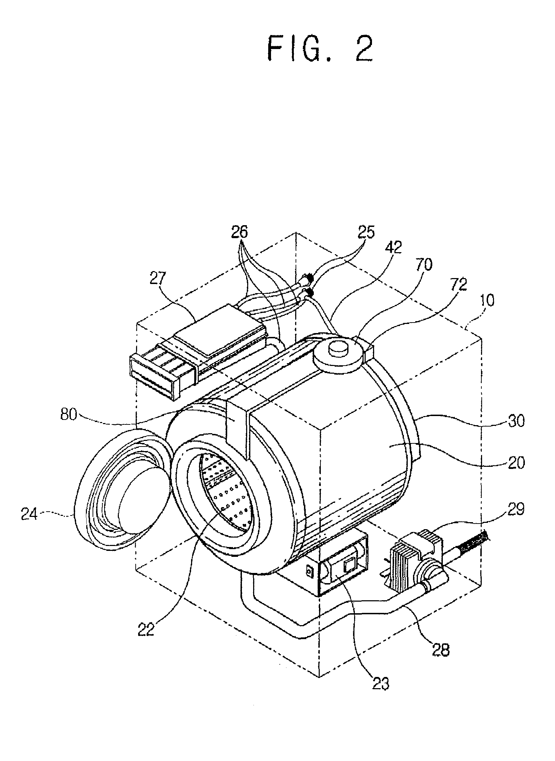

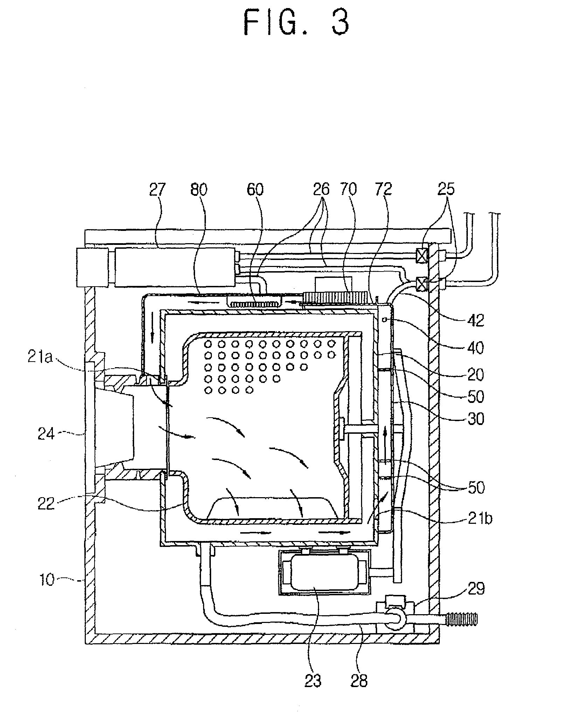

Referring now to the drawings, a washing machine according to the present invention is shown in Figures 2 and 3 and comprises a main body 10, a cylindrical drum 20 provided in the main body 10, for containing clothes therein. A cylindrical washing chamber 22 is rotatably mounted in the drum 20 and has a plurality of water drainage holes formed through a wall thereof. A driving motor 23 is provided in a lower portion of the drum 20, and rotates the drum clockwise or counterclockwise to operate washing, rinsing and drying phases. A door 24 is provided to open and close an opening in a front portion of the main body 10.

A water supply unit is provided in an upper portion of the drum 20 comprising a water supply valve 25, a water supply pipe 26, a laundry detergent unit 27 to fill the drum with water and, at the same time dissolve a laundry detergent as well.

Furthermore, a drying unit is provided in the upper portion of the drum 20 to dry the clothes after a water-draining phase is completed. The drying unit comprises a fan 70 and a fan duct 72 provided in an upper portion of the drum 20. A discharge duct 80 is provided to be in communication with the fan duct 72 and an air inlet 21a of the drum 20. A heater 60 is provided inside the discharge duct 80 and a condensing duct 30 communicates with an air outlet 21 b of the drum 20 and the fan duct 72. A coolant spray or means for spraying 40 is provided inside the condensing duct 30 and sprays coolant. A coolant supply pipe 42 is connected between the coolant spray 40 and a supply of coolant (not shown).

In operation, air supplied by the fan 70 passes through the discharging duct 80 and is heated by the heater 60. The heated air is supplied to the inside of the drum 20 through the air inlet 21a to heat and dry the clothes. During the drying phase, hot moisture-laden air is generated and drawn out of the drum 20 into the condensing duct 30 through the air outlet 21b of the drum 20. Moisture contained in the hot moisture-laden air is condensed by coolant sprayed from a lower portion to an upper portion of the condensing duct 30 by the coolant spray 40 as the hot moisture-laden air passes through the condensing duct 30 and flows in the fan duct 72.

At least one condensing guide 50 is provided inside the condensing duct 30 to enhance condensation efficiency. The shape and an installation position of the condensing guide(s) 50 may be varied as necessary.

A lower portion of the drum 20 is provided in a drain unit comprising a drain pipe 28, a drain pump 29 to drain washing water from inside the drum 20.

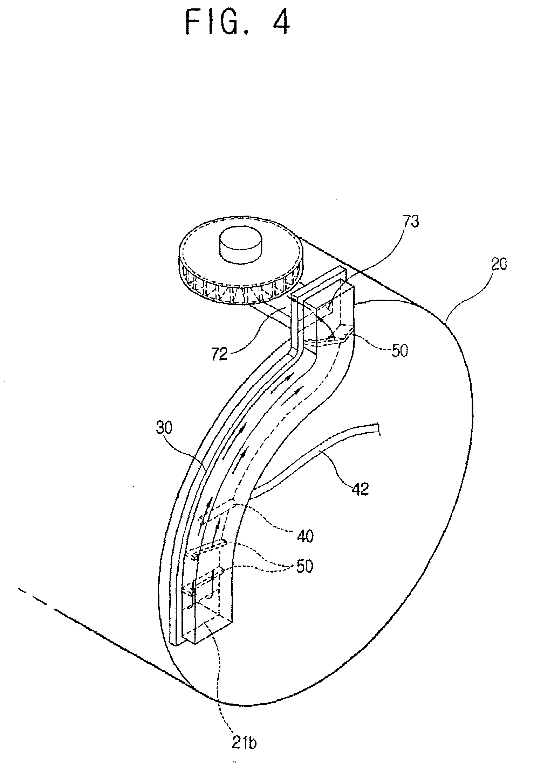

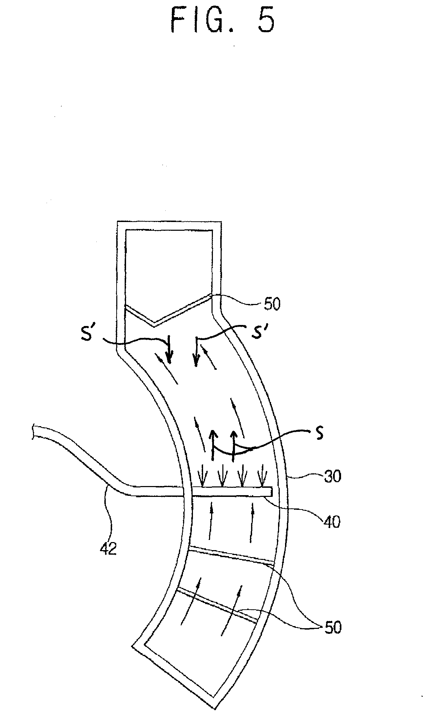

As shown in Figures 4 and 5, the condensing duct 30 communicates the air outlet 21b of the drum 20 with an air inlet 73 of the fan duct 72, and the hot moisture-laden air generated inside the drum 20 during the drying phase is drawn into the condensing duct 30. The coolant spray 40 is housed inside the condensing duct 30 and sprays the coolant from a lower portion to an upper portion thereof to condense the moisture contained in the hot moisture-laden air passing through the condensing duct 30. In other words, the coolant supplied through the coolant supply pipe 42 is sprayed upwardly in the condensing duct 30 by the coolant spray 40. The upwardly sprayed coolant reaches a certain height and falls back down to the lower portion of the condensing duct 30 to condense the moisture in the hot moisture-laden air. It is contemplated within the scope of the invention that the coolant may be ejected from both the lower portion and the upper portion of the condensing duct 30 as well as from only the lower portion or the upper portion.

As a result of the coolant changing direction after being sprayed from the coolant spray 40 from the lower portion to the upper portion, the hot moisture-laden air comes into contact with the coolant while the coolant is sprayed upwardly as well as while the coolant falls back down. Accordingly, the hot moisture-laden air is in contact with the coolant for a comparatively longer period of time than in prior art systems described above and the condensation efficiency is thereby significantly improved. In one embodiment, the coolant spray 40 sprays the coolant so that the coolant goes beyond the upper portion of the condensing duct 30 and then falls down under gravity.

As mentioned above, the condensing duct 30 may be provided with a plurality of condensing guides 50 that protrude from an inner wall thereof. The plurality of condensing guides 50 increases the time and surface area over with the coolant and the hot moisture-laden air are in contact to further enhance the condensation efficiency. In one possible embodiment, a V-shaped condensing guide 55 is provided in an upper portion of the condensing duct 30 and forms the coolant into a large water drop to prevent the coolant from backflow, and thereby further enhances drying efficiency compared to a straight-lined condensing guide. It is contemplated that the coolant spray 40 comprises a spray nozzle to uniformly spray the coolant but may comprise other well known devices.

The condensing duct 30 comprises an air path connecting the air outlet 21b provided in the lower portion of the drum 20 and the fan duct 72 provided in the upper portion of the drum 20, and a side thereof is opened and bent about a given degree and adhesively coupled to a rear side of the drum 20 and the fan duct 72.

In an exemplary condensing process of the washing machine hereinbefore described, the coolant supplied through the coolant supply pipe 42 is sprayed upwardly as shown by the arrows S from the lower portion to the upper portion of the condensing duct 30 by the coolant spray 40 until the coolant reaches a certain height, and then the coolant falls down as shown by the arrow S' to condense the moisture contained in the hot moisture-laden air.

An exemplary embodiment of the present invention comprises a washing machine with a drying unit, but similar devices are also contemplated to incorporate the invention such as a drying machine to dry clothes.

Although a few exemplary embodiments of the present invention have been shown and described, it would be appreciated by those skilled in the art that changes may be made in these embodiments without departing from the principles of the invention, the scope of which is defined in the claims hereafter.

## Claims

1. A washing and/or drying machine comprising a tub and a duct having an inlet and an outlet in communication with the inside of the tub and means to draw air from the tub into the duct and circulate it back into the tub, the duct extending from a lower portion of the tub to an upper portion of the tub, **characterised in that** the duct includes a spray means configured to spray coolant in a substantially upwardly direction within the duct.

2. A washing and/or drying machine according to claim 1 wherein the spray means is disposed in a lower portion of the duct

3. A washing and/or drying machine according to claim 1 or claim 2 wherein the spray means comprises a spray nozzle.

4. A washing and/or drying machine according to any of claims 1 to 3 wherein at least one condensing guide is provided in the duct to increase the inside surface area of the duct.

5. A washing and/or drying machine according to claim 4 wherein a plurality of condensing guides are provided in the duct.

6. A washing and/or drying machine according to claim 4 or claim 5 wherein the or each condensing guide comprises a fin extending from a wall of the duct.

7. A washing and/or drying machine according to any of claims 4 to 6 wherein at least one condensing guide is V-shaped in cross-section and is positioned within the duct with the tip of the 'V' pointing towards the lower portion of the duct.

8. A washing and/or drying machine according to any preceding claim wherein the inlet to the duct is connected to an outlet of the tub at the lower portion of the tub, such that air drawn from the tub flows from the lower portion to the upper portion thereof in the same direction as the spray of coolant.

9. A washing and/or drying machine according to claim 8 wherein the spray of coolant is such that, in use, it stops proximate the upper portion of the duct and then falls back down to the lower portion thereof under gravity.

10. A washing and/or drying machine according to any preceding claim wherein the means to draw air from the tub into the duct and circulate it comprises a fan.

11. A washing and/or drying machine according to any preceding claim comprising a heater to heat air circulating back into the tub.

12. A washing machine comprising a drum, a condensing duct which communicates with the drum and is supplied with air from an inside of the drum and a coolant spray provided inside the condensing duct and which sprays coolant in an upward direction.

13. The washing machine according to claim 12 wherein the coolant spray sprays the coolant so that the coolant goes beyond the upper portion of the condensing duct and then falls down due to gravity.

14. The washing machine according to claim 12 wherein the coolant spray comprises a spray nozzle.

15. The washing machine according to claim 13 wherein the coolant spray comprises a spray nozzle.

16. The washing machine according to claim 12 further comprising a V-shaped condensing guide protruded from an inner wall of the condensing duct.

17. The washing machine according to claim 16 wherein the V-shaped condensing guide is positioned in the condensing duct above an area reached by the coolant spray.

18. The washing machine according to claim 12 wherein the lower portion is in a lower half of the condensing duct.

19. A washing machine comprising a drum, a condensing duct which communicates with the drum and is supplied with air from an inside of the drum and means for spraying coolant inside the condensing duct in an upward direction.

20. The washing machine according to claim 19 wherein the means for spraying coolant sprays the coolant so that the coolant goes beyond the upper portion of the condensing duct and then falls down due to gravity.

21. The washing machine according to claim 19 wherein the means for spraying coolant comprises a spray nozzle.

22. The washing machine according to claim 19 further comprising a V-shaped condensing guide protruding from an inner wall of the condensing duct.

23. The washing machine according to claim 22 wherein the V-shaped condensing guide is positioned in the condensing duct above an area reached by the coolant spray.

24. A drying machine comprising a drum, a condensing duct which communicates with the drum and is supplied with air from an inside of the drum and a coolant spray provided inside the condensing duct, and which sprays coolant in an upward direction.
